(19) Europäisches Patentamt
European Patent Office
Office européen des brevets

(11) EP 4 756 682 A1

(12) **DEMANDE DE BREVET EUROPEEN**

(43) Date de publication:
10.06.2026 Bulletin 2026/24

(21) Numéro de dépôt: 25216716.8

(22) Date de dépôt: 18.11.2025

(51) Classification Internationale des Brevets (IPC):
**G06N 10/40** (2022.01) **G06N 10/70** (2022.01)

(52) Classification Coopérative des Brevets (CPC):
**G06N 10/40; G06N 10/70**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: 06.12.2024 FR 2413610

(71) Demandeur: **Commissariat à l'Energie Atomique
et aux Energies
Alternatives
75015 Paris (FR)**

(72) Inventeurs:
• JADOT, Baptiste
38054 GRENOBLE Cedex 09 (FR)
• SCHMIDT, Quentin
38054 GRENOBLE Cedex 09 (FR)
• GRAVIER, Oscar
38054 GRENOBLE Cedex 09 (FR)
• SAVIN, Valentin
38054 GRENOBLE Cedex 09 (FR)

(74) Mandataire: **Atout PI Laplace
Immeuble Up On
25 Boulevard Romain Rolland
CS 40072
75685 Paris Cedex 14 (FR)**

(54) **LECTURE DE QUBITS MULTIPLEXEE POUR CODE CORRECTEUR D'ERREURS**

(57) Dispositif quantique comprenant une pluralité de qubits, des électromètres (100) couplés à des qubits de la pluralité, un module de génération de tensions (90) générant une pluralité de tensions pour exciter lesdits électromètres à des fréquences, phases ou amplitudes propres à chaque électromètre et une ligne de transmission d'un signal agrégé issu des électromètres, ledit signal étant, après sa prise en charge par un amplificateur (110), traité par un module de démodulation (120) pour fournir des signaux démodulés. La pluralité de qubits comprend des qubits organisés en un code de surface pour correction d'erreurs quantiques comprenant des qubits de données pour assurer la conservation de données quantiques et des qubits auxiliaires couplés aux électromètres (100), des modulations introduites par le module de génération de tensions (90) dans les tensions de la pluralité de tensions étant adaptées dynamiquement par un module (150) d'attribution des modulations adapté au code et en fonction dudit signal démodulé (125 ; 200) pour régler une fidélité de lecture du dispositif quantique.

Fig. 5

## Description

### Contexte technique

L'invention porte sur la lecture de bits quantiques, ou qubits. La technique de lecture implique un multiplexage, et la mise œuvre d'un code correcteur d'erreurs.

Le domaine de l'invention est celui du calcul quantique, en particulier basé sur des bits quantiques (qubits) construits par des technologies fondées sur les matériaux semi-conducteurs, notamment bien sûr le silicium - on parle donc de qubits semi-conducteurs.

Les qubits semi-conducteurs ont démontré un fonctionnement compatible avec une température de l'ordre de 1K, et ont des fidélités d'opération élevées, comme exposé dans Huang, J.Y., Su, R.Y., Lim, W.H. et al. High-fidelity spin qubit operation and algorithmic initialization above 1 K. Nature 627, 772-777 (2024). De plus on sait contrôler un nombre élevé de qubits semi-conducteurs en parallèle. L'intégration à large échelle de ces qubits est donc recherchée.

Les qubits semi-conducteurs peuvent fonctionner par piégeage par potentiel électrostatique pour isoler des électrons individuels, ou des trous, l'information étant alors codée sur le spin de l'électron ou du trou - on parle en conséquence dans ce cas de qubits de spin.

On distingue les implémentations NISQ (noisy intermediate scale quantum computing ou calcul quantique d'échelle intermédiaire et bruité), dans lesquelles on exploite un faible nombre (de l'ordre de 10 à 100) de qubits imparfaits, et le calcul LSQ (large scale quantum calculation ou calcul quantique à large échelle) qui implique des codes correcteurs d'erreurs pour réaliser des qubits logiques plus fiables, dans lesquels les erreurs sont corrigées efficacement.

Le calcul LSQ requiert le contrôle de plusieurs milliers à plusieurs millions de qubits en environnement cryogénique. Cet environnement cryogénique a un volume interne limité, et un nombre de câble passant depuis ou vers l'extérieur de l'enceinte restreint (on parle de goulot d'étranglement des connexions filaires). De plus la puissance thermique dissipée acceptable aux différents étages du cryostat est grandement limitée par leur température, ce qui impose que la consommation électrique des circuits chargés du contrôle et de la lecture des qubits, et qui sont donc au plus près de ceux-ci dans un étage de basse température, soit restreinte. Il est donc impératif d'optimiser ces circuits.

On développe donc des techniques de multiplexage des signaux électromagnétiques adaptées aux signaux à faire traverser l'enceinte cryogénique. On développe aussi des circuits de contrôle ou de lecture au plus proche des qubits, éventuellement en distinguant des enceintes successives de températures croissantes autour d'une enceinte centrale contenant les qubits.

Pour la lecture des qubits semiconducteurs en particulier, des techniques de multiplexage ont été proposées. Certaines impliquent une forme de réflectométrie, dans laquelle le qubit est connecté à un résonateur. Un signal incident est appliqué au qubit pour sonder les variations de fréquence ou d'amplitude de résonance de résonateur LC couplés aux différents qubits pour déterminer les états de ceux-ci. En affectant à chaque qubit une fréquence de résonance différente, on combine l'information de chaque qubit dans un seul câble puis on démodule et on traite le signal en dehors du cryostat. Mais la dimension des inductances L des résonateurs LC (100 $\mu$m² à 10 mm² par résonateur et donc par qubit) limite les possibilités d'intégration à large échelle. [Jerger2012, Park2021, Abdo2018, Naaman2021, Bronn2022].

Une autre approche consiste à utiliser des amplificateurs à large bande passante, de tels amplificateurs permettant un multiplexage en fréquence, phase ou amplitude. [Morel2022] présente une implémentation de ce type de multiplexage fréquentiel, ainsi qu'un traitement du signal à base d'intégrateurs et de comparateurs. Cette approche est avantageuse car les techniques de fabrication de qubits et de ce type de circuits de lecture sont proches, ce qui permet leur co-intégration à basse température dans un volume limité. Le nombre de qubits lus simultanément est de l'ordre de 10 à 50, et dépend entre autres de la bande passante de l'amplificateur (typiquement environ 50 MHz) et de la fidélité de lecture recherchée (99,99% en 1 $\mu$s).

S'agissant de l'amplificateur, on distingue les R-TIA, qui ont une rétroaction résistive, des C-TIA qui ont une rétroaction capacitive. Les C-TIA peuvent présenter une bande passante plus élevée, typiquement 40 MHz pour une consommation de 200 $\mu$W [Razavi2000, Romanova2019, Schmidt2024]. On peut ainsi découper cette large bande passante en différentes plages chacune affectée à un transistor à un électron (single electron transistor ou SET) respectif, et réaliser un multiplexage fréquentiel de la lecture de qubits.

Un multiplexage en phase et/ou amplitude a été proposé par [Schmidt2023] en utilisant le même type d'amplificateurs. Cette technique permet d'augmenter le nombre de qubits par amplificateur (typiquement d'un facteur 5). Le multiplexage en phase introduit la notion de constellation - une constellation étant formée par les symboles associés aux $2^N$ combinaisons d'états de N qubits partageant la même fréquence. [Schmidt2023] détaille le choix des phases/amplitudes appliquées à chaque qubit, afin de garantir une fidélité maximale en séparant les $2^N$ symboles. Ainsi, la fidélité de lecture peut être différente pour chaque combinaison d'états. En particulier, les états 00..0 (tous les qubits dans l'état 0) et 11..1 (tous les qubits dans l'état 1) peuvent facilement être confondus, et nécessitent un soin particulier.

La correction des erreurs quantiques (QEC) est une technique basée sur l'augmentation du nombre de qubits utilisés pour encoder une quantité donnée d'informations. Cet encodage permet de détecter et de corriger les erreurs. Les erreurs des ordinateurs quantiques sont liées au bruit, à la décohérence et aux imperfections dans les portes quantiques.

Les codes correcteurs d'erreurs quantiques CCEQ ont pour objectif de former quelques qubits logiques parfaits à partir d'un grand nombre de qubits physiques imparfaits. Dans le cas de codes correcteurs stabilisateurs, les qubits sont séparés en un groupe de qubits porteurs de l'information quantique (les data qubits ou qubits de données) et un groupe de qubits qui permet de créer le qubit logique et d'obtenir des informations sur les erreurs survenues (les ancilla qubits ou qubits auxiliaires). Le théorème de non-clonage empêche une mesure directe des qubits de données ou une duplication de leur information. En revanche, on peut utiliser les qubits auxiliaires pour réaliser des mesures de parité sur des groupes de qubits de données. L'information de la parité de chaque groupe peut être décodée afin d'estimer les erreurs apparues sur le système et de les corriger sans affecter l'information détenue par le qubit logique

Les codes correcteurs d'erreurs quantiques fonctionnent ainsi avec plusieurs qubits physiques dont l'état conjoint représente un qubit logique. Le code est conçu afin que les erreurs puissent être détectées et corrigées en mesurant certains qubits du code. On connait les codes de répétition, les codes Shor, le code Steane, et enfin le code surface. Le code surface est un code correcteur d'erreurs qui utilise un treillis bidimensionnel de qubits pour encoder des qubits logiques.

Par exemple [Tomita2014] présente un code correcteur d'erreurs quantiques nommé surface-17.

Mais jusqu'ici, le traitement du signal par des circuits de lecture n'est pas abordé conjointement avec l'exploitation des données obtenues par le traitement du signal dans le cadre d'un code correcteur d'erreurs quantiques.

Plus précisément, dans la majorité des codes correcteurs d'erreurs quantiques, la lecture des qubits est supposée simultanée et de fidélité identique pour tous les qubits, sans que de plus on évalue la consommation des circuits associés et donc la faisabilité pratique.

Et de l'autre côté, les concepteurs de circuits de lecture multiplexée ne prennent en général pas en compte l'utilisation qui peut être faite des signaux lus par leurs circuits quand ceux-ci sont utilisés. Ces concepteurs considèrent par ailleurs chaque signal comme indépendant des autres. Ils ne prennent en conséquence pas en compte les corrélations attendues dans ces signaux pour optimiser leurs circuits.

En plus ou à la place du multiplexage fréquentiel, on introduit également un multiplexage en phase, en amplitude ou en phase et en amplitude des différents transistors à un électron. Après démodulation par la fréquence f, on obtient un nombre complexe (I, Q) dépendant de l'état combiné des SETs. L'ensemble des coordonnées possibles forme une constellation.

Cette technique augmente le nombre de SETs par amplificateurs à transimpédance.

Plus généralement, on crée des constellations à N SETs en choisissant les N phases et amplitudes de façon à disperser les points (I, Q) associés à une des $2^N$ combinaisons d'états.

Les distances entre deux points de la constellation n'étant pas toutes identiques, certaines combinaisons d'états ont une fidélité de lecture plus ou moins grande. Jusqu'ici, la pratique était de définir ainsi une fidélité moyenne, en affectant un poids identique à chaque combinaison d'états.

Les inventeurs ont souhaité améliorer cette pratique et mieux contrôler la fidélité de lecture.

## Caractéristiques de l'invention et avantages

Pour cela il est proposé un dispositif quantique comprenant une pluralité de qubits, des électromètres couplés à des qubits de la pluralité, un module de génération de tensions générant une pluralité de tensions pour exciter lesdits électromètres avec des modulations propres à chaque électromètre et une ligne de transmission d'un signal agrégé issu des électromètres, ledit signal étant, après sa prise en charge par un amplificateur, traité par un module de démodulation s'appliquant à l'information multiplexée.

Plusieurs fréquences différentes peuvent être utilisées, chaque fréquence étant commune à une pluralité de qubits, ce qui permet de lire plus de qubits, mais l'invention, dans sa généralité, est implémentable avec une seule fréquence tout autant qu'avec plusieurs fréquences.

De manière originale, la pluralité de qubits comprend des qubits organisés en un code de surface pour correction d'erreurs quantiques comprenant des qubits de données pour assurer la conservation de données quantiques et des qubits auxiliaires couplés aux électromètres, et des modulations introduites par le module de génération de tensions dans les tensions de la pluralité de tensions étant adaptées dynamiquement par un module d'attribution des modulations adapté au code correcteur et en fonction dudit signal démodulé pour régler, et souvent maximiser, une fidélité de lecture du dispositif quantique.

Ainsi, dans l'invention présentement discutée, on considère une situation dans laquelle les probabilités d'occurrence de ces états sont différentes les unes par rapport aux autres de plusieurs ordres de grandeurs, et on modifie l'optimisation des fréquences, phases et amplitudes appliquées par rapport à un cas dans lequel les probabilités d'occurrence des états seraient similaires entre elles.

L'invention repose sur le principe dans le cadre d'une lecture multiplexée, d'utiliser de manière dynamique la détermination de l'état d'un ensemble donné de qubits pour optimiser continument la fidélité de la mesure de ces qubits, la fidélité étant la probabilité de lire un résultat correct.

Plus précisément la détermination de l'état de l'ensemble de qubits est réalisée préalablement à son utilisation par les codes correcteurs d'erreurs quantiques, et on introduit une boucle de rétroaction entre la lecture des qubits et l'interprétation des données, ce qui diminue la consommation électrique et la durée de la lecture, sans pour autant réduire la fidélité moyenne de lecture.

L'observation à la base du processus utilisé est qu'en présence d'erreurs à corriger, toutes les combinaisons d'états - ou syndromes, ceux-ci étant en nombre fini déterminé par le nombre de qubits et formant donc une liste des syndromes possibles - ne sont pas équiprobables.

De plus, à partir de la connaissance du système à un instant donné, on peut associer à chaque syndrome de la liste de syndromes une probabilité d'occurrence pour la prochaine mesure, en ayant préalablement étudié toutes les erreurs possibles sur les qubits.

Ces deux propriétés permettent de maximiser la fidélité moyenne de lecture, en privilégiant la mesure de syndromes dans lequel le système a la plus grande probabilité d'être lors de la mesure suivante. Cela est tout à fait original et remarquable.

Selon des caractéristiques avantageuses et optionnelles :

- Une polarisation des électromètres (des transistors à un électron) couplés aux qubits auxiliaires peut être également adaptée dynamiquement pour régler ladite fidélité de lecture. Il est aussi proposé d'utiliser la symétrie des transistors à un électron SET vis-à-vis des états |0> et |1> pour réinitialiser le syndrome à 00..0 après chaque mesure.

- Une adaptation dynamique des modulations peut être effectuée entre deux lectures successives du dispositif quantique. On implémente donc une boucle de rétroaction entre le résultat de la dernière mesure de syndrome en date et le choix des fréquences, phases et amplitudes, que l'on optimise alors pour la prochaine lecture sur la base de la connaissance du dernier syndrome mesuré, via la détermination des probabilités d'apparition des syndromes par le code correcteur d'erreurs.

- Le module d'attribution des modulations peut prendre en compte une connaissance acquise des particularités matérielles liées à des taux d'erreur particuliers des qubits de la pluralité. Ainsi, on tient compte de la spécificité matérielle connue de chaque qubit (qubits de données et qubits auxiliaires). Par exemple si un qubit présente un taux d'erreur plus élevé que les autres, on augmente la fidélité de mesure souhaitée pour tous les syndromes comprenant un changement d'état de ce qubit. Cette mémoire des caractéristiques matérielles individuelles des qubits peut évoluer dans le temps. Deux qubits auxiliaires observant un même qubit de données peuvent être couplés à des électromètres excités avec des fréquences distinctes. Ainsi, on peut grouper les qubits auxiliaires, en réduisant leurs corrélations autant que faire se peut, et séparer les groupes de qubits auxiliaires ainsi définis en leur associant des fréquences différentes, ou en les reliant à des amplificateurs différents. On limite ainsi le nombre de symboles explicables par une seule erreur, appelés symboles d'ordre 1 et qui sont les plus probables, par constellation.

- Une dimension caractéristique, typiquement une largeur maximale, mesurée dans un plan cartésien, par exemple le plan IQ de sortie d'un module de démodulation en quadrature, d'une région du plan, en général convexe, associée à un syndrome d'erreurs quantiques dans le code, peut être modifiée par un module de décodage de l'information démodulée en fonction avantageusement d'une probabilité d'apparition dudit syndrome calculée par exemple par un module de code correcteur d'erreurs, et en tout cas au moins d'une attribution des modulations faite par le module d'attribution des modulations sur la base de ladite probabilité. En effet, dans un mode de réalisation, on démodule le signal à basse température puis on utilise des seuils (par exemple avec la technique region of interest ROI) pour déterminer l'état des qubits auxiliaires. Ce syndrome est ensuite transmis au décodeur du code correcteur d'erreurs pour analyse et détermination de l'erreur associée. Les seuils sont ajustés par rapport aux ratios de probabilités d'occurrence des états correspondants, pour maximiser la fidélité de lecture moyenne.

- Le module de décodage de l'information démodulée - information souvent représentée dans le plan complexe - peut être à l'intérieur d'un cryostat, éventuellement à plusieurs étages, maintenant les qubits à une température cryogénique de fonctionnement Interpréter la mesure directement à basse température est en effet avantageux en termes de bruit de mesure et de taux de transfert de données vers l'électronique placée à température plus élevée. Le module d'attribution des modulations peut néanmoins être en dehors dudit cryostat, dans le même environnement que le module de décodage du code correcteur d'erreurs et fournir, par une consigne au module de décodage de l'information démodulée, des seuils de détection et avantageusement des constellations aux fins de décodage de l'information démodulée.

- Un module de décodage du code correcteur d'erreurs peut générer une liste de probabilités de syndromes pour une lecture ultérieure au vu d'un signal analogique qui lui est communiqué par un module de démodulation traitant le signal multiplexé et qui peut être un module de démodulation en quadrature. En effet, alors qu'il est proposé ci-avant d'effectuer une démodulation ferme, dans un autre mode de réalisation, on réalise d'abord une démodulation souple, uniquement en fréquence, sans seuillage dans le plan IQ et donc sans identification d'un symbole, puis on transmet les nombres complexes (I, Q) obtenus aux différentes fréquences au code correcteur d'erreurs. Cette technique est avantageuse car elle permet de donner au code correcteur d'erreurs une information sur l'incertitude de mesure. Si un nombre complexe (I, Q) est trop éloigné des symboles attendus, on peut éventuellement répéter la mesure, sans répéter l'extraction des syndromes.

- Le module de démodulation du signal multiplexé peut être à l'intérieur d'un cryostat maintenant les qubits à une température cryogénique de fonctionnement, le module de décodage du code correcteur d'erreurs étant en dehors dudit cryostat.

- Le code peut être le code surface-17. Mais cela est un exemple parmi d'autres.

- Plusieurs fréquences différentes peuvent être utilisées, chaque fréquence étant commune à une pluralité de qubits, ou spécifique à un qubit.

- Plusieurs électromètres d'un groupe d'électromètres peuvent être excités à une fréquence commune et avec des phases ou amplitudes propres à chaque électromètre du groupe, le module de démodulation effectuant une démodulation en quadrature par mélange avec la fréquence commune pour fournir un signal démodulé, les modulations introduites par le module de génération de tensions comprenant des modulations en phase ou amplitude

Au final, on souhaite ajuster la discernabilité entre combinaison d'états d'un même groupe de qubits auxiliaires selon leur probabilité d'occurrence. Ces probabilités d'occurrence sont estimées pour le code correcteur d'erreurs utilisé et les probabilités d'erreur des qubits et guident le choix des fréquences, phases et amplitudes appliquées sur chaque qubit auxiliaire. On maximise la fidélité de lecture moyenne, définie comme somme des fidélités de lecture de chaque état $F_i$ pondérées par les probabilités d'occurrence correspondantes $P_i$.

$$F_{avg} = \sum_0^N F_i \, p_i$$

Avec $N$ le nombre de qubits auxiliaires.

**Liste des figures**

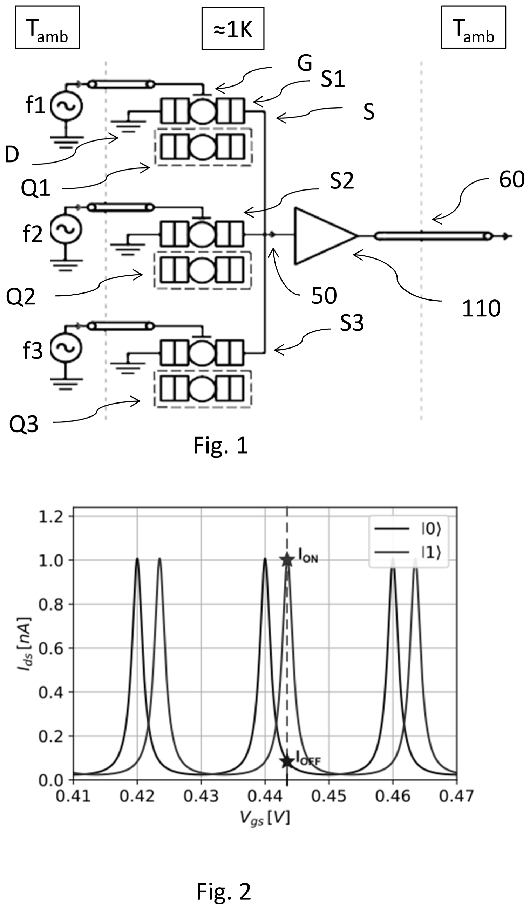

La figure 1 une illustration, non limitative, d'un circuit de lecture de qubits semi\-conducteurs par électrométrie.

Dans la suite de la figure 1, la figure 2 montre une caractéristique courant de drain en fonction de la tension de grille d'électromètres pouvant être utilisés dans l'invention et représentés en figure 1.

La figure 3 montre une manière simple de répartir les états d'un ensemble de 2 qubits dans le plan IQ, avec des modulations de phases 0 et $\pi/2$.

La figure 4 montre un exemple de code correcteur d'erreurs dit surface-17 rotated (ou rotated surface 17, « rotated » signifiant « tourné ») qui porte sur 9 qubits de données.

La figure 5 montre un mode de réalisation de l'invention.

La figure 6 montre une manière de répartir les états d'un ensemble de 4 qubits dans le plan IQ, utilisée dans différents modes de réalisation spécifiques de l'invention.

La figure 7 montre une mise en œuvre particulière de l'invention, avec la répartition de la figure 6 et le code correcteur d'erreurs de la figure 4.

La figure 8 montre une autre mise en œuvre particulière de l'invention, encore avec la répartition de la figure 6 et le code correcteur d'erreurs de la figure 4.

La figure 9 montre un détail de réalisation utilisé dans un mode spécifique de réalisation, en lien avec la figure 2.

La figure 10 montre un mode de réalisation de l'invention alternatif à celui de la figure 5.

La figure 11 montre un autre mode de réalisation de l'invention.

## Description en relation avec les figures

[Fig. 1] En figure 1, on a représenté un circuit quantique à qubits semi-conducteurs et lecture des qubits par électrométrie. Il fonctionne à l'aide d'un principe de lecture de charge, avec multiplexage fréquentiel.

Les qubits semiconducteurs sont définis à partir d'électrons ou trous placés dans des nanostructures proches d'un transistor. À une température inférieure à 4K, on peut isoler un nombre fixe de charges dans des boîtes quantiques, aussi appelées quantum dots (QD). Pour l'application qui est discutée ici, on place deux de ces boîtes quantiques face à face, mais dans deux régimes différents.

La première boite quantique sert de qubit, contient un faible nombre d'électrons et de trous, par exemple un seul électron ou un seul trou. On peut par exemple utiliser le spin des électrons ou des trous comme système à deux niveaux |0> et |1>, mais les techniques décrites ici sont applicables à d'autres formes de qubits semiconducteurs.

L'autre boîte quantique est utilisée comme détecteur, et est opérée dans un régime appelé single-electron transistor (SET), pour transistor à un électron [Williams2009, Gong2019, Morel2022].

Le circuit de la figure 1 est construit autour de qubits de spin sur semi-conducteur, par exemple sur silicium, placés dans un cryostat à température de l'ordre d'un kelvin (1 K). Chaque qubit de spin est couplé capacitivement à un transistor à un seul électron (Single Electron Transistors ou SET), placé à son contact dans le cryostat.

On a représenté des qubits, Q1, Q2 et Q3 mais l'invention utilise un nombre plus grand de qubits, par exemple de l'ordre de la dizaine, de la centaine ou plus, regroupés en différents groupes.

Les SETs associés, un par qubit, sont respectivement référencés SET S1, S2 et S3 .... Ils possèdent chacun une grille G ou plusieurs grilles, ainsi qu'une source S et un drain D, qui sont identifiés sur la figure pour le SET S1. En fonction du spin du qubit (c'est-à-dire son état, s'agissant d'un qubit de spin), le SET voit sa conductance varier. Cet effet se produit par un couplage capacitif entre les boites quantiques respectives du qubit et du SET.

Les drains D des SETs sont reliés à un ou des potentiels constants (ou éventuellement non constants), et par conséquent, le SET délivre un courant sur sa source S en fonction du spin du qubit.

Les SETs sont excités en tension par des générateurs de tension, comme cela est représenté en partie gauche de la figure. Chaque SET est excité de manière séparée. Des fréquences différentes, f1, f2 et f3, générées par des générateurs de tension sont utilisées.

Les générateurs de tension sont placés, dans le mode de réalisation présenté, à température ambiante $T_{amb}$ et déploient des signaux de quelques mV, à des fréquences allant de 1 MHz jusqu'à environ 100 MHz. Ils sont reliés chacun par une ligne de transmission qui pénètre dans le cryostat, aux SET. Il est aussi possible, dans une variante, de placer les générateurs dans le cryostat.

Les courants de sortie des SETs, apparaissant à leur source S et qui sont de l'ordre du nanoampère (nA), sont collectés et additionné en un courant total $I_{out}$ sur une ligne conductrice 50 à grande proximité des SETs, dans le cryostat des qubits. Cette ligne est commune à plusieurs qubits, sans pour autant l'être néanmoins à tous les qubits - auquel cas une autre ligne conductrice est présente pour les autres qubits.

Le courant $I_{out}$ est amplifié par une chaîne d'amplification 110 (comprenant un ou plusieurs amplificateurs), puis lu par un circuit de démodulation.

Ainsi, il peut y avoir sur la ligne de transmission 50, lors de la collecte des courants, un multiplexage en fréquence. Il peut y avoir aussi un multiplexage en phase et en amplitude.

Des moyens de démodulation en quadrature sont utilisés pour séparer des composantes I et Q qui sont ensuite traitées, pour chaque fréquence, par des convertisseurs analogique-numérique.

Le circuit de démodulation peut être placé à différentes températures notamment la température ambiante.

Il peut n'y avoir qu'un seul câble de sortie de l'étage de température le plus froid pour tous les qubits, cette sortie pouvant se faire avant ou après la chaîne d'amplification 110, ou entre deux segments successifs de celle-ci. La chaîne d'amplification 110 peut en effet être placée à une température différente de celle des qubits.

La chaîne d'amplification 70 comprend un amplificateur à transimpédance (TIA), qui convertit le courant $I_{out}$ en une tension $V_{out}$ placé par exemple à la même température que les qubits.

Le signal sur la ligne de transmission d'ondes électromagnétiques 60, avant démodulation, mais après conversion par le TIA est une tension de sortie.

La démodulation IQ extrait les composantes complexes I et Q du signal et les transmets à un convertisseur analogique numérique qui permet de placer l'amplitude et la phase du signal dans le plan complexe. Celles-ci se présentent sous la forme de constellations de points appelés symboles correspondant à des combinaisons des états des qubits auxiliaires excités à la fréquence.

[Fig. 2] En figure 2, on a représenté la caractéristique du courant de drain Ids (ou courant de source) en fonction de la tension de la grille Vgs (prise entre la grille et la source, ou la grille et le drain) pour un transistor à un électron.

En appliquant une faible différence de potentiel entre la source et le drain du transistor à un électron, et en faisant varier, selon l'axe des abscisses sur la figure 2, la tension appliquée sur la grille du transistor à un électron, on observe une succession de fins pics de conductance - le courant drain-source en nA est représenté en ordonnées sur la figure 2 et il culmine à 1,0 nA - séparés par des zones de faible conductance.

Ces pics dits pics de Coulomb ont typiquement une amplitude de 1 nA et une largeur de quelques mV (2 à 3 mV sur la figure 2). La séparation entre deux pics est de l'ordre de 10 mV à 100 mV (20 mV sur la figure 2).

La position des pics est imposée par l'environnement électrostatique de la boîte quantique, ce qui en fait du transistor à un électron un très bon électromètre local.

En particulier, l'état de charge du qubit décale le pic de Coulomb du transistor à un électron, ce qui induit un changement de courant $I_{sd}$. Sur la figure 2 on constate que les pics pour l'état |0> et ceux pour l'état |1> sont décalés d'environ 3 mV.

Pour maximiser cet effet, on polarise la tension de grille du SET $V_{SET}$ à une position où la sensibilité à l'état de charge du qubit est maximale. Si le SET est suffisamment couplé au qubit, ce qui est typiquement le cas dans les qubits semiconducteurs à fort pouvoir d'intégration, le pic de Coulomb est décalé d'une valeur plus grande que sa largeur à mi-hauteur. On a donc un contraste maximal entre les deux états « 0 » : $I_{OFF} \approx 0$ nA et « 1 » : $I_{ON} \sim 1$ nA. Cela est mentionné sur la figure 2 pour une tension de grille entre 0,44 V et 0,45 V, proche de 0,443 V.

La lecture de l'état d'un qubit par électrométrie implique plusieurs conversions. Tout d'abord, dans le cas d'un qubit de spin il y a une première conversion spin vers charge par un échange de charges avec une autre boîte quantique QD (lecture de par blocage de Pauli, ou blocage de spin ou en anglais Pauli spin blockade readout) ou avec un réservoir (lecture de type Elzerman ou en anglais Elzerman readout). Ensuite, cet état de charge du qubit influence la conductance du transistor à un électron et modifie le courant de sortie $I_{sd}$ mesuré.

L'état du qubit |0> peut correspondre au niveau de courant bas « 0 » ou haut « 1 » au besoin, et inversement pour l'état |1> qui correspond alors à l'autre état. On choisit donc par le point de polarisation $V_{SET}$ l'état du qubit de référence que l'on souhaite associer au plus faible courant $I_{sd} = 0$ nA.

Un amplificateur à transimpédance TIA transforme un courant en une tension, avec un gain typique de l'ordre de $10^6$ à $10^9$ V/A. Il permet l'amplification des faibles signaux produits par les SET (0,1 à 10 nA) vers des tensions et des niveaux de bruit compatibles avec une mesure par de l'électronique à température ambiante. Pour augmenter leur bande passante et minimiser leur bruit, il est avantageux de placer ces amplificateurs à basse température, voire au plus près des qubits et des transistors à un électron SET.

Le principe de multiplexage en fréquence dans un amplificateur à transimpédance TIA est fondé sur la transmission sur la ligne de transmission d'extraction des signaux hors du cryostat de courants de différentes fréquences, ces fréquences étant comprises entre la limite inférieure et la limite supérieure de la bande passante de l'amplificateur à transimpédance.

S'agissant de l'amplificateur, on utilise dans un mode de réalisation un C-TIA et on découpe la bande passante en différentes plages chacune affectée à un transistor à un électron SET respectif, et on réalise un multiplexage fréquentiel de la lecture, par exemple une lecture en 1 MHz par SET, soit environ 40 SETs par C-TIA.

On vise typiquement une fidélité supérieure à 99,99% pour un temps de lecture de 1 μs.

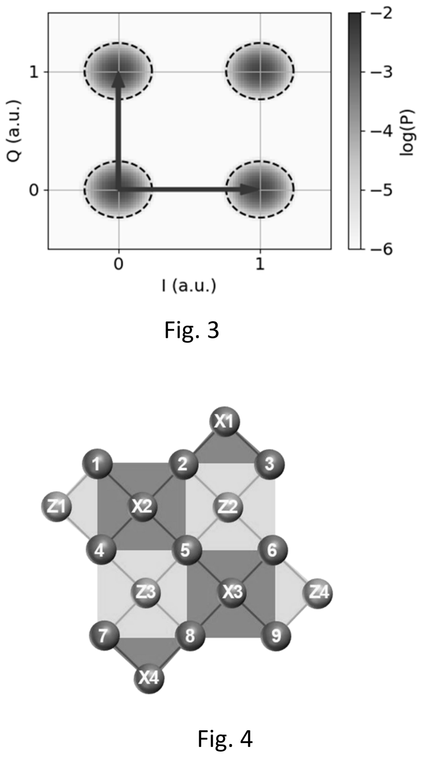

[Fig. 3] En plus ou à la place du multiplexage fréquentiel, on introduire également dans certaines variantes un multiplexage en phase, en amplitude ou en phase et en amplitude des différents transistors à un électron. On applique par exemple sur deux SET A et B des signaux de même fréquence f mais de phases différentes $\phi_A$ et $\phi_B$. Après démodulation par la fréquence f, on obtient un nombre complexe (I, Q) à quatre valeurs possibles, selon l'état combiné des SETs A et B. L'ensemble de ces quatre coordonnées forme une constellation.

La figure 3 montre le cas d'un multiplexage à deux phases : 0 et $\pi/2$. En abscisses la partie réelle et en ordonnées la partie imaginaire Q. Les symboles sont dans le cadran supérieur droite du repère (ou en limite de celui-ci). Compte tenu de l'étalement des mesures liée au bruit de la mesure durant l'intégration du signal, ils ont la forme de tâches qui sont des gaussiennes à deux dimensions. Une délimitation par ROI (region of interest) est représentée en pointillés, sur la base de l'intensité mesurée représentée en échelle logarithmique par la teinte utilisée.

Cette technique de multiplexage à deux phases 0 et $\pi/2$ double le nombre de SETs par amplificateurs à transimpédance, sans perte de fidélité ou augmentation de consommation de l'amplificateur TIA.

Dans une variante, on utilise la modulation d'amplitude en quadrature QAM, où l'amplitude de la modulation varie en puissances de 2 et où la phase alterne entre 0, $\pi/2$, $\pi$ et $3\pi/2$.

Plus généralement, on crée des constellations à N SETs en choisissant les N phases et amplitudes de façon à maximiser la distance entre chaque point (I, Q) associé à une des $2^N$ combinaisons d'états.

Les distances entre deux points de la constellation n'étant pas toutes identiques, certaines combinaisons d'états ont une fidélité de lecture plus ou moins grande.

[Fig. 4] La figure 4 présente l'agencement des qubits utilisés dans le code correcteur d'erreurs surface 17. Il s'agit d'un code correcteur d'erreurs de surface. Les codes surface sont des codes correcteurs d'erreurs qui utilisent des caractéristiques d'un réseau de qubits pour protéger les qubits logiques des erreurs. On met en place un treillis bidimensionnel de qubits pour encoder des qubits logiques. Les qubits n'interagissent qu'avec leurs plus proches voisins.

Ici, le réseau est composé de 9 qubits de données numérotés de 1 à 9 et 8 qubits auxiliaires répartis en deux sous-groupes l'un appelé sous-groupe « X » et l'autre sous-groupe « Z », et identifiés, s'agissant des qubits auxiliaires du premier sous-groupe X1 à X4 et s'agissant des qubits auxiliaires du deuxième sous-groupe Z1 à Z4. Chaque qubit de données est connecté à un ou deux qubits auxiliaires « X » et à autant de qubits auxiliaires « Z ». Par exemple le qubit de données 1 est connecté aux qubits auxiliaires Z1 et X2, et le qubit de données 5 est connecté aux qubits auxiliaires X2, Z2, X3, Z3. Chaque qubit auxiliaire est connecté à deux ou quatre qubits de données. Les qubits de données ne sont pas connectés entre eux, et les qubits auxiliaires ne sont pas connectés entre eux. L'ensemble forme un treillis bidimensionnel, d'où le terme « surface ». Le nombre de qubits 9+8=17 justifie le nom « surface 17 ».

Par exemple, lors de l'apparition d'une erreur « X » sur le qubit 5, aucune autre erreur n'apparaissant simultanément, les qubits auxiliaires Z2 et Z3 sont modifiés et les autres qubits auxiliaires, Z1, X1, Z4, X2, X3 et X4 sont inchangés. On interprète alors ce résultat comme une erreur « X » sur le qubit de données 5. Cette erreur est gardée en mémoire et l'erreur résiduelle est suivie jusqu'à nécessité de correction par l'application des portes quantiques appropriées.

Les erreurs de type « X » sont des bit flips, alors que les erreurs de type Z sont des phase flips. Les procédures de correction sont connues.

L'algorithme du code correcteur d'erreurs effectue périodiquement une mesure du syndrome, à savoir l'ensemble des 8 états des qubits auxiliaires X1-X4 et Z1-Z4.

Puis, après la mesure, un décodeur détermine l'erreur la plus probable - quand il y en a eu une - expliquant ce syndrome mesuré. Cette erreur peut être la superposition d'erreurs « X » et/ou « Z » apparaissant simultanément sur plusieurs qubits de données. Toutefois étant donné le faible taux d'erreur par qubit, la plus grande probabilité est qu'il n'y ait aucune erreur sur l'ensemble des qubits de données.

S'il y a vraisemblablement eu une erreur sur un ou plusieurs qubits, le décodeur détermine ensuite les actions à mettre en œuvre pour corriger l'erreur identifiée.

Le code correcteur est capable de corriger un nombre d'erreurs simultanées (au sens de coexistant lors de la mesure) inférieur à un nombre d'erreurs maximum qui lui est propre. Surface 17 ne corrige néanmoins qu'une seule erreur à la fois. Des codes plus élaborés permettent néanmoins de corriger plusieurs erreurs à la fois.

En raisonnant dans le cas où il n'y a pas d'erreur Z et où le syndrome sur les qubits auxiliaires X est 0000, en supposant un syndrome initial sur les qubits auxiliaires Z « 0000 », et un taux p=1% d'erreur « X » sur chaque qubit de données, on peut calculer la probabilité de mesurer chaque syndrome lors de la lecture suivante selon le tableau 1.

[Table 1]

| Syndrome ($Z4Z3Z2Z1$) | Interprétation la plus probable sur les qubits de données | Probabilité |
|---|---|---|
| « 0000 » | Pas d'erreur | 90.63% |
| « 0001 » | 1 | 1% |
| « 0010 » | 2 ou 3 | 2% |
| « 0011 » | 1+2 ou 1+3 | 0.02% |
| « 0100 » | 7 ou 8 | 2% |
| « 0101 » | 4 | 1% |
| « 0110 » | 5 | 1% |
| « 0111 » | 1+5 ou 2+4 ou 3+4 | 0.03% |
| « 1000 » | 9 | 1% |
| « 1001 » | 1+9 | 0.01% |
| « 1010 » | 6 | 1% |
| « 1011 » | 1+6 | 0.01% |
| « 1100 » | 7+9 ou 8+9 | 0.02% |
| « 1101 » | 4+9 | 0.01% |
| « 1110 » | 6+7 ou 6+8 ou 5+9 | 0.03% |
| « 1111 » | 4+6 | 0.01% |

Ainsi, face à un syndrome 0000 le code estime que la probabilité la plus élevée est qu'il n'y ait pas eu d'erreur Z sur les quatre qubits de données.

Face à un syndrome 0001 le code estime que la probabilité la plus élevée est qu'il y ait eu une erreur Z sur le qubits de données 1 et pas d'autres erreurs.

Face à un syndrome 0101 le code estime que la probabilité la plus élevée est qu'il y ait eu une erreur Z sur le qubits de données 4 et pas d'autres erreurs.

Face à un syndrome 0110 le code estime que la probabilité la plus élevée est qu'il y ait eu une erreur Z sur le qubits de données 5 et pas d'autres erreurs.

Face à un syndrome 1000 le code estime que la probabilité la plus élevée est qu'il y ait eu une erreur Z sur le qubits de données 9 et pas d'autres erreurs.

Face à un syndrome 1010 le code estime que la probabilité la plus élevée est qu'il y ait eu une erreur Z sur le qubits de données 6 et pas d'autres erreurs.

Face à un syndrome 0010 le code estime que la probabilité la plus élevée est qu'il y ait eu une erreur Z sur le qubits de données 2 ou 3, sans qu'on puisse à ce stade distinguer les qubits de données 2 et 3, et pas d'autres erreurs.

Face à un syndrome 0100 le code estime que la probabilité la plus élevée est qu'il y ait eu une erreur Z sur le qubits de données 7 ou 8, sans qu'on puisse à ce stade distinguer les qubits de données 7 et 8, et pas d'autres erreurs.

Les syndromes mentionnés ci-dessus ont une probabilité d'apparition d'au moins 1%, et incluent tous les syndromes associés à des erreurs d'ordre 1.

Chaque syndrome a une probabilité propre, et ces probabilités diffèrent de plusieurs ordres de grandeur selon si le syndrome correspond à 0 erreur, 1 erreur ou 2 erreurs simultanées sur les qubits de données. Dans l'exemple présenté la fidélité de lecture de l'état « 0000 » a été maximisée, car le taux d'erreur est faible et par conséquent le syndrome est probablement inchangé. Ensuite, la fidélité associée aux erreurs d'ordre 1 (« 0001 », « 0010 », « 0100 », « 1000 », « 0101 », « 0110 » et « 1010 ») est maximisée.

Certaines erreurs d'ordre 2 sont interprétables avec parfois une ambiguïté simple (deux ou trois possibilités - c'est le cas des syndromes 0011, 0111, 1100 et 1110) voire pour les syndromes 1001, 1011, 1101 et 1111 pas d'ambiguïté : ils sont associés respectivement à la combinaison d'une erreur sur le qubit de données 1 et une erreur sur le qubit de données 9, la combinaison d'une erreur sur le qubit de données 1 et une erreur sur le qubit de données 6, la combinaison d'une erreur sur le qubit de données 4 et une erreur sur le qubit de données 9, et la combinaison d'une erreur sur le qubit de données 4 et une erreur sur le qubit de données 6.

Pour certaines erreurs d'ordre 2, et pour toutes les erreurs d'ordre 3 et 4, le code correcteur interprète faussement le syndrome comme provenant d'une autre erreur d'ordre inférieur donc plus probable. Ces situations ne sont pas indiquées individuellement dans le tableau 1. Dans cet exemple, l'ensemble de ces situations correspond à une probabilité d'occurrence de 0,37%.

D'autres arrangements de qubits physiques, différents du code surface-17, peuvent être utilisés pour construire un qubit logique.

Les portes appliquées lors de l'extraction de syndrome avant mesure de l'état des qubits auxiliaires peuvent comprendre des portes control-NOT (C-NOT) appliquées entre le qubit auxiliaire et chacun des qubits de données, qui sont au nombre de quatre ou deux, d'où l'utilisation de portes C-NOT, par exemple au nombre de 4. Pour les qubits auxiliaires Z, il est possible de ne pas utiliser d'autres portes en plus de celles ainsi indiquées, et pour les qubits auxiliaires X, deux portes Hadamard peuvent être utilisées en plus.

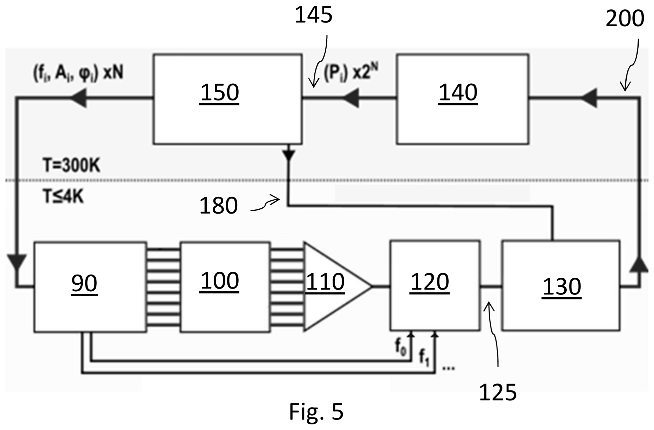

[Fig. 5] L'invention concerne une lecture multiplexée en phase, fréquence et amplitude d'un ensemble de qubits auxiliaires.

Comme cela apparait à la figure 5, le système considéré est un large ensemble de qubits de données et de qubits auxiliaires, dont l'état des qubits auxiliaires 100 est régulièrement mesuré par des électromètres, eux-mêmes connectés à une chaîne d'amplification 110, qui transmet les signaux mesurés à un démodulateur en quadrature 120 (ou plus généralement un module de démodulation traitant l'information multiplexée fournie par la chaîne d'amplification 110). Celui-ci reçoit, aux fins de la démodulation, les fréquences qui ont été générées par des générateurs de tension sinusoïdale 90 pour lire les qubits auxiliaires 100 : $f_0$, $f_1$, etc.... Les générateurs de tension sinusoïdale 90 effectuent une synthèse de radiofréquences formant des tensions de la forme $A_0 \sin(2\pi f_0 + \varphi_0)$ avec les triplets $A_0$, $f_0$, $\varphi_0$ fournis par un module d'attribution discuté plus loin, à raison d'un triplet pour un qubit. Dans le mode de réalisation représenté, les générateurs de tension sinusoïdale 90 et le démodulateur en quadrature 120 sont tous les deux dans l'enceinte de température à moins de 4K, comme les qubits et l'amplificateur à transimpédance de la chaîne d'amplification 110. Ainsi, les tensions sont disponibles dans l'environnement du démodulateur en quadrature 120 et il n'y a pas besoin de faire passer des câbles en nombre important à travers la paroi du cryostat. Ces tensions sont utilisées comme références pour la démodulation. Il est aussi possible comme divulgué dans EP4016402A1 mais cela est optionnel que le cryostat comprenne deux étages et qu'un étage interne du cryostat à température inférieure renferme spécifiquement les qubits, les électromètres et la chaîne d'amplification, les générateurs de tension et le module de démodulation étant dans un étage de température supérieure mais inférieure à 4K. Il est aussi possible que les générateurs de tension soient placés à température ambiante comme représenté en figure 1.

Les générateurs de tension sinusoïdales 90, outre qu'ils forment des tensions sinusoïdales à différentes fréquences, fournissent, pour chaque fréquence, différents déphasages de la tension sinusoïdale, et également différentes amplitudes de celle-ci, chaque combinaison étant appliquée au résonateur d'un qubit donné. Ainsi les principes de modulation en fréquence, en phase et en amplitude sont mis en œuvre pour lire un nombre élevé de qubits, avec un nombre limité d'amplificateurs à transimpédance, voire un seul amplificateur à transimpédance, si la largeur de sa bande passante le permet.

On applique ainsi les techniques de modulation en fréquence, phase et/ou amplitude présentées précédemment à un ensemble de qubits auxiliaires dont on souhaite connaître l'état. Le choix des modulations optimales est effectué en dehors du cryostat, à température ambiante (environ 300 K) dans un module d'attribution 150. Le module d'attribution 150 fournit autant de triplets de fréquence, amplitude, phase qu'il y a de qubits auxiliaires à lire, ici N. Les triplets de fréquence, amplitude, phase sont aussi fournis par le module d'attribution 150 à un module de décodage dans le plan complexe 130 qui interprète l'information démodulée, qui est placé dans le cryostat à moins de 4 K et qui reçoit du démodulateur en quadrature 120, pour chaque fréquence $f_i$, les intensités dans le plan complexe IQ déterminées par la démodulation en quadrature, sous la forme d'un signal démodulé 125, analogique. Ces intensités sont décodées à l'aide des constellations et des seuils de détection associés à la fréquence $f_i$ et fournis dans le cadre d'une consigne 180 par le module d'attribution 150 au module de décodage dans le plan complexe 130.

Le module de décodage dans le plan complexe 130 fournit les états décodés formant un syndrome 200 au module de décodage du code correcteur d'erreurs 140 qui se trouve en dehors du cryostat à température ambiante.

Et le module de décodage du code correcteur d'erreurs 140 génère la liste 145 des probabilités d'apparition $P_i$ des différents états des qubits auxiliaires. Ils sont au nombre de $2^N$. Cette liste est transmise au module d'attribution 150 et utilisée par celui-ci pour décider des modulations à effectuer, et plus précisément pour définir les triplets de fréquence, amplitude et phase.

La mesure est répétée et permet l'observation de l'apparition d'erreurs sur les qubits de données.

L'architecture de lecture ainsi définie offre le libre choix des fréquences, phases et amplitudes (fk, φk, Vk) appliquées à chaque qubit auxiliaire d'indice k, contrairement au cas d'un multiplexage à base de réflectométrie pour lequel la fréquence est fixée par un résonateur.

De plus, cette affectation des fréquences, phases et amplitudes est modifiée à chaque fois que cela est avantageux au cours d'une série de mesures, par exemple pour isoler les signaux relatifs à certains syndromes que l'on souhaite mesurer plus précisément.

Pour minimiser l'erreur de lecture, on tient compte des corrélations attendues entre les états des différents qubits auxiliaires pour une même erreur sur les qubits de données et on groupe les qubits auxiliaires selon ces corrélations.

En séparant spectralement deux qubits auxiliaires qui observent un même qubit de données dans des bandes de fréquences éloignées, on minimise ainsi le nombre de points ayant une haute probabilité d'occurrence dans une même constellation, à une même fréquence de démodulation.

Ainsi, pour une fréquence de démodulation donnée, la probabilité d'occurrence des états 1100, 1010, 1001, 0110, 0101 et 0011 passe de ~p à ~$p^2$, à savoir la probabilité de deux erreurs indépendantes.

On établit un tableau de probabilités d'occurrence pour chaque état. A partir d'un syndrome donné on estime la probabilité de mesurer chaque syndrome (le même syndrome, et aussi chacun des autres $2^N$-1 syndromes) lors de la lecture suivante.

Sur cette base on ajuste la phase, l'amplitude et la fréquence affectées à chaque qubit auxiliaire aux fins de sa lecture afin de maximiser la fidélité moyenne de lecture des $2^N$ syndromes, les fidélités de lecture de chaque syndrome étant pondérée par la probabilité d'occurrence du syndrome aux fins du calcul de la fidélité moyenne.

Le problème revient donc à considérer comme paramètre d'entrée les $2^N$ probabilités $P_i$ obtenues grâce à la connaissance du code correcteur d'erreurs utilisé, et déterminer N triplets fréquence/phase/amplitude (fk, φk, Vk) qui maximisent $F_{avg} = \Sigma\ F_i \times P_i$.

De plus, cette optimisation peut prendre en compte des caractéristiques particulières à chaque qubit physique, comme un taux d'erreur plus important pour un qubit de données ou un qubit auxiliaire, lié à l'implémentation matérielle telle qu'elle est connue.

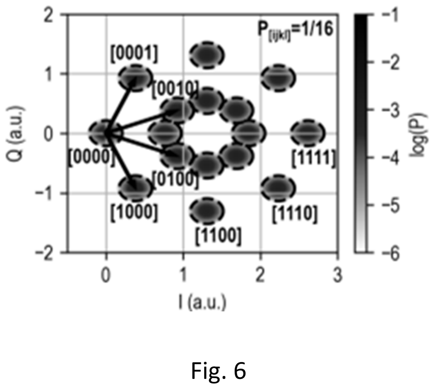

[Fig. 6] En figure 6 on a représenté une constellation obtenue en modulant 4 SETs avec des phases (-3π)/8, (-π)/8, π/8 et 3π/8. Les $2^4$=16 états apparaissent sous la forme de pics de gaussiennes en deux dimensions - et donc sous la forme de tâches essentiellement circulaires. L'état 0000 est centré sur le point I=0 Q=0. Une délimitation par ROI (region of interest) est représentée en pointillés, sur la base de l'intensité attendue représentée en échelle logarithmique par la teinte utilisée, dans l'hypothèse indiquée qui est que les 16 états sont équiprobables (P = 1/16 pour 0000, 0001, ...., 1111). Le seuil dans le plan IQ est une courbe curviligne dans le plan (I, Q), une droite ou un contour comme un cercle ou un rectangle autour de la zone du plan associée à l'un des deux états et donc peut être un cercle comme cela est représenté sur la figure.

Les états ne sont pas régulièrement espacés : 8 d'entre eux, dont l'état 0000, mais aussi les états 0001, 0011, 0111, 1111, 1110, 1100 et 1000 sont sur un cercle de grand diamètre centré sur le point de l'axe des abscisses proche de = 1,4, et 8 autres, dont les états 0010 et 0100 sont sur un cercle de petit diamètre, environ la moitié du diamètre du grand cercle, et de même centre que le grand cercle.

Cette répartition donne par exemple une meilleure fidélité de lecture pour l'état [1000], qui est sur le cercle de grand diamètre et dont le pic n'a pas de voisins proches, que pour l'état [0100], qui est sur le cercle de petit diamètre et côtoie avec une proximité importante deux autres pics de la constellation.

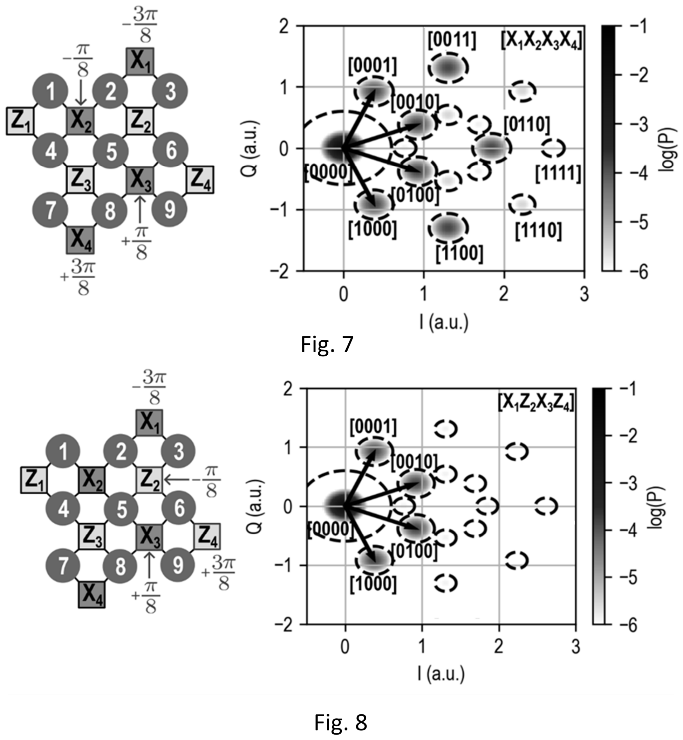

[Fig. 7] On utilise donc des seuils adaptés pour discerner les états associés à diverses répartitions des probabilités entre deux pics voisins, différentes de la répartition 50%-50% qui était utilisée implicitement en figure 6. Pour cela, la dimension dans un plan de la région d'intérêt associée à un syndrome est modifiée par le module de décodage dans le plan complexe 130 en fonction de la probabilité d'apparition du syndrome fournie par la liste 145, et de l'attribution des modulations faite par le module d'attribution 150 sur la base de ladite probabilité.

Ainsi, entre deux états à distinguer, la probabilité a priori peut être répartie par exemple sous la forme 20% pour le premier état et 80% pour le deuxième état. Le seuil dans le plan IQ est un cercle de centre inchangé par rapport au choix fait en lien avec la figure 6 mais de rayon adapté pour maximiser la fidélité moyenne $F_{avg} = P_0 \times F_0 + P_1 \times F_1$.

En figure 7 on a représenté plus précisément la lecture multiplexée en phase des qubits auxiliaires X1, X2, X3 et X4 dans le cadre du code correcteur surface-17, pour un taux d'erreur pour les erreurs de type Z p=1% sur les qubits de données 1 à 9 et un syndrome initial [0000]. Comme cela est représenté sur la partie gauche de la figure, le qubit auxiliaire X3 a une phase de $\pi/8$, le qubit auxiliaire X2 a une phase de $-\dfrac{\pi}{8}$, le qubit auxiliaire X4 a une phase de $\dfrac{3\pi}{8}$, et le qubit auxiliaire X1 a une phase de -3π/8.

Les seuils optimisés pour ce cas sont représentés en pointillés dans le plan complexe représenté en partie droite de la figure. L'état [0000] est celui de plus forte probabilité et on lui a associé un seuil sous la forme d'un cercle de rayon important, suivi par les états [1000], [1100], [0001], et [0011] sur le grand cercle et [0100], [0010], [0110] sur le petit cercle qui ont des seuils sous la forme de cercles de rayons intermédiaires. Les autres états, de probabilité plus faible, impliquent au moins deux erreurs indépendantes et ont des seuils sous la forme de cercles de rayons plus faibles. Ainsi, les états [0100], [0010], [0110] ont une probabilité d'être confondus avec un autre état diminuée, malgré leur positionnement sur le petit cercle.

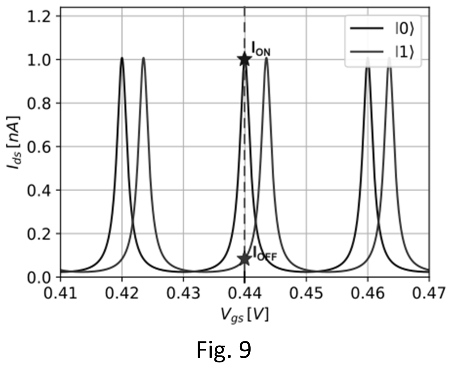

[Fig. 8] En figure 8, on a représenté, toujours dans le cadre du code correcteur surface 17, et pour un taux d'erreur pour les erreurs de type Z p=1% sur les qubits de données 1 à 9 et un syndrome initial [0000], la lecture multiplexée en phase d'un groupe de qubits auxiliaires dont certains sont de catégorie X et d'autres de catégorie Z. Il s'agit précisément sur la figure 9 de X1, Z2, X3 et Z4. Comme cela est représenté sur la partie gauche de la figure, le qubit auxiliaire X3 a une phase de $\pi/8$. Le qubit auxiliaire Z2 a une phase de $\dfrac{-\pi}{8}$. Le qubit auxiliaire X1 a une phase de $\dfrac{-3\pi}{8}$. Le qubit auxiliaire X4 a une phase de 3π/8.

Comme le groupe de qubits auxiliaires X1, Z2, X3 et Z4 ne contient aucune paire de qubits auxiliaires observant le même type d'erreur sur le même qubit de données, la probabilité d'obtenir les états [1100] et [0011] (sur le grand cercle) et, [0110] (sur le petit cercle) est diminuée par rapport à la situation de la figure 7, ce qui améliore la fidélité moyenne de la mesure dans le plan complexe (partie droite de la figure).

Les seuils optimisés pour ce cas sont représentés à nouveau en pointillés. L'état [0000] est celui de plus forte probabilité et on lui a associé un seuil sous la forme d'un cercle de rayon important, suivi par les états [1000], [0100], [0010] et [0001], qui ont des seuils sous la forme de cercles de rayons intermédiaires. Les autres états, de probabilité plus faible, impliquent au moins deux erreurs indépendantes et ont des seuils sous la forme de cercles de rayons plus faibles, notamment [1100], [0011] et [0110] qui sont visibles sur la figure 7 pour comparaison.

Il est préférable de grouper des qubits auxiliaires présentant les plus faibles corrélations possibles à une même fréquence, afin d'obtenir une constellation avec le moins d'états de forte probabilité possible.

[Fig. 9] Par ailleurs, après décodage dans le plan complexe d'un syndrome et avant la mesure suivante, il est avantageux de mémoriser ce syndrome comme nouvel état de référence avant une nouvelle extraction de syndrome.

Pour cela, et comme cela est représenté en figure 9, on modifie les points de polarisation de chaque transistor à un électron - les électromètres - étant dans l'état « 1 » dans le résultat du dernier décodage dans le plan complexe, de manière à fixer par convention l'état concerné comme étant l'état « 0 ». De cette manière, la mesure suivante donne systématiquement « 00..0 » lorsqu'aucun changement de parité n'a lieu et qu'il n'y a donc aucune erreur détectable par le code correcteur d'erreurs. On a ainsi, réinitialisé le syndrome à « 00..0 ».

Sur la figure 9, par rapport à la figure 2, le point de polarisation de la grille du transistor servant d'électromètre pour le qubit auxiliaire qui a été identifié comme étant dans l'état 1 est placé à 0,44 V alors qu'il était précédemment à environ 0,443 V. Ainsi, la polarisation des électromètres couplés aux qubits auxiliaires est adaptée dynamiquement pour régler ladite fidélité de lecture : la répartition des pics dans le plan complexe est à nouveau celle qui est présentée en figure 7 (partie droite de la figure) ou figure 8 (partie droite de la figure).

Ainsi, dans le cas particulier des syndromes à très faible probabilité d'occurrence liés à plusieurs erreurs physiques indépendantes, le ratio de probabilité avec les autres états est pris en compte pour déterminer la région d'intérêt (ROI) optimale comme cela a été expliqué. Dans certains cas, ces états peu probables peuvent être ignorés pour maximiser la fidélité globale de la mesure. Comme cela a été représenté en figure 5, il est prévu dans un mode de réalisation que le décodage dans le plan complexe est effectué à basse température, c'est-à-dire dans le cryostat à moins de 4K, à la température à laquelle sont placés les qubits.

Dans un mode de réalisation, on réalise une démodulation à basse température suivie de l'application de seuils pour déterminer le syndrome mesuré.

Cette méthode a pour avantage d'interpréter la mesure directement à basse température (<4K), ce qui est avantageux en termes de bruit de mesure et de taux de transfert de données vers l'électronique placée à température ambiante (environ 300K).

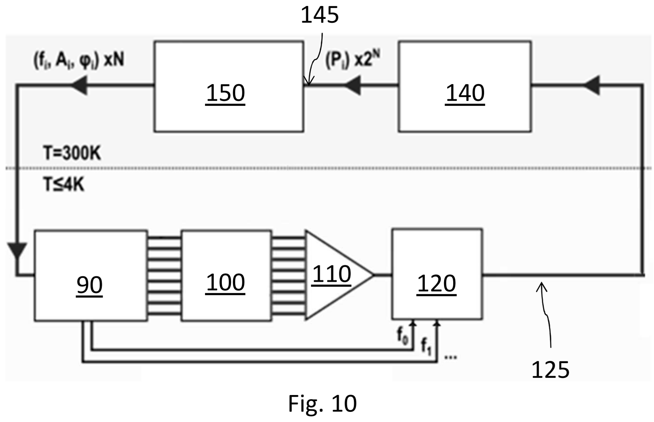

[Fig. 10] Mais selon une variante représentée en figure 10, on effectue une démodulation souple en fréquence. Le démodulateur en quadrature 120 est à nouveau dans le cryostat de faible température (<4K) et fournit au module de décodage du code correcteur d'erreurs 140, qui est lui toujours dans l'environnement extérieur (environ 300K) non pas un syndrome mais sous forme d'un signal analogique, un nombre complexe (I, Q) pour chaque fréquence. Le module de décodage dans le plan complexe 130 est supprimé. En supprimant le seuillage que ce module 130 effectue dans le mode de réalisation précédent, on fournit au module de décodage du code correcteur d'erreurs 140 une information plus riche sur la fidélité de la mesure, à savoir une information comprenant une distance entre la valeur effectivement mesurée et la valeur attendue la plus proche.

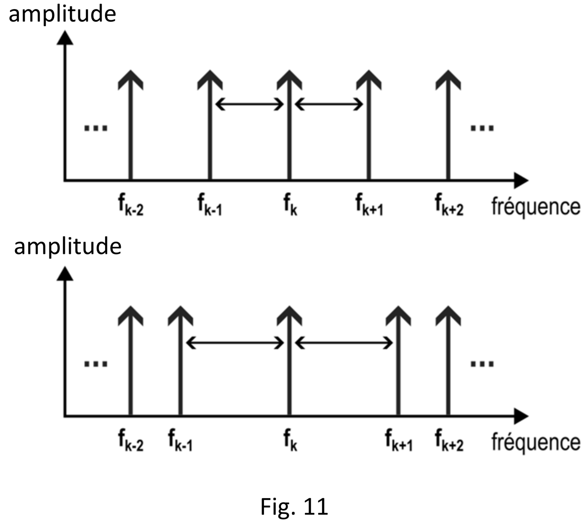

[Fig. 11] En figure 11 on a représenté une adaptation de la fréquence, avec par exemple un seul qubit par fréquence. La figure a une partie haute et une partie basse, sur chacune desquelles l'axe des abscisses représente les fréquences f1, f2, f3... (figure 1) auxquelles les excitations sont générées par les générateurs de tension sinusoïdale 90.

En partie supérieure de la figure, les fréquences sont régulièrement espacées et la fidélité de lecture est la même à toutes les fréquences - la fidélité de lecture est homogène sur l'ensemble des différents qubits.

En partie inférieure de la figure, on a augmenté la séparation entre une fréquence particulière $f_k$ et les fréquences voisines. Les fréquences $f_{k-1}$ et $f_{k+1}$ sont respectivement plus proches des fréquences $f_{k-2}$ et $f_{k+2}$, en conséquence, celles-ci étant maintenues inchangées, ou étant déplacées mais plus faiblement. Les fréquences $f_{k-2}$ et $f_{k+2}$ se retrouvent en tout état de cause dans un environnement plus encombré que $f_k$, la bande de fréquences disponible étant limitée.

Pour un temps d'intégration du signal identique pour tous les qubits, la fidélité de lecture est alors meilleure pour la fréquence $f_k$ et donc pour le qubit associé que pour les fréquences $f_{k+2}$, $f_{k+1}$, $f_{k-1}$ et $f_{k-2}$ et les qubits associés. Il y a donc une meilleure fidélité de lecture pour le qubit associé à la fréquence $f_k$ que pour les qubits associés aux autres fréquences.

Selon l'invention, le module d'attribution 150 (figure 5 ou figure 10) adapte dynamiquement les fréquences attribuées et leurs écartements respectifs sous la contrainte de la largeur de bande passante de la chaîne d'amplification 110 (figure 5 ou figure 10), pour régler la fidélité de lecture des qubits en fonction des priorités définies par le module d'attribution 150 notamment sur la base des probabilités d'apparition $P_i$ des différents états des qubits auxiliaires.

On peut ainsi à chaque étape de lecture séparer spécifiquement deux états ou plus dont l'un au moins que l'on veut mieux discerner au détriment d'autres états pour lesquels la mesure peut être moins précise pour des raisons similaires à celles qui ont été évoquées précédemment. On adapte alors dynamiquement la fréquence envoyée sur chaque transistor à un électron au lieu de conserver des fréquences régulièrement espacées.

**Références**

[Park2021] Park et al., A fully integrated cryo-CMOS SoC for state manipulation, readout and high-speed gate pulsing of spin qubits, IEEE Journal of solid state circuits, vol. 56, n° 11, 3289-3306.

[Jerger2012] M. Jerger et al., Frequency division multiplexing readout and simultaneous manipulation of an array of flux qubits. Appl. Phys. Lett. 23 July 2012; 101 (4): 042604.

[Gong2019] M. J. Gong et al., "Design Considerations for Spin Readout Amplifiers in Monolithically Integrated Semiconductor Quantum Processors," 2019 IEEE Radio Frequency Integrated Circuits Symposium (RFIC), Boston, MA, USA, 2019, pp. 111-114.

[Rasavi2000] B. Razavi, "A 622 Mb/s 4.5 pA//spl radic/Hz CMOS transimpedance amplifier [for optical receiver front-end]," 2000 IEEE International Solid-State Circuits Conference. Digest of Technical Papers (Cat. No.00CH37056), San Francisco, CA, USA, 2000, pp. 162-163.

[Ramanova2019] A. Romanova, et al., A Review of Modern CMOS Transimpedance Amplifiers for OTDR Applications. Electronics 2019, 8, 1073.

[Tomita2014] Tomita, Yu, and Krysta M. Svore. "Low-Distance Surface Codes under Realistic Quantum Noise". Physical Review A 90, no. 6 (11 December 2014): 062320.

[Morel2022] fascicule EP4016402A1

[Abdo2018] fascicule WO2018/185542A1

[Naaman2021] WO2021/061776A1

[Bronn2022] US2022/0140927A1

[Williams2009] EP2075745A1

[Schmidt2023] demande de brevet FR2306530 du 22 juin 2023.

[Schmidt2024] demande de brevet FR2403977 du 17 avril 2024.

**Revendications**

1. Dispositif quantique comprenant une pluralité de qubits, des électromètres (100) couplés à des qubits de la pluralité, un module de génération de tensions (90) générant une pluralité de tensions pour exciter lesdits électromètres avec des modulations propres à chaque électromètre et une ligne de transmission d'un signal agrégé issu des électromètres, ledit signal étant, après sa prise en charge par un amplificateur (110), traité par un module de démodulation (120), le dispositif quantique étant **caractérisé en ce que** la pluralité de qubits comprend des qubits organisés en un code pour correction d'erreurs quantiques comprenant des qubits de données pour assurer la conservation de données quantiques et des qubits auxiliaires couplés aux électromètres (100), des modulations introduites par le module de génération de tensions (90) étant adaptées dynamiquement en fonction dudit signal démodulé (125 ; 200) par un module (150) qui attribue les modulations pour régler une fidélité de lecture du dispositif quantique, en privilégiant à partir de la connaissance du système à un instant donné la mesure de syndromes dans lequel le système a la plus grande probabilité d'être lors de la mesure suivante.

2. Dispositif quantique selon la revendication 1, **caractérisé en ce qu'**une polarisation des électromètres (100) couplés aux qubits auxiliaires est également adaptée dynamiquement pour régler ladite fidélité de lecture.

3. Dispositif quantique selon la revendication 1 ou la revendication 2, **caractérisé en ce qu'**une adaptation dynamique des modulations est effectuée entre deux lectures successives du dispositif quantique.

4. Dispositif quantique selon l'une des revendications 1 à 3, **caractérisé en ce que** le module d'attribution prend en compte une connaissance acquise des particularités matérielles liées à des taux d'erreur particuliers des qubits de la pluralité.

5. Dispositif quantique selon l'une des revendications 1 à 4, **caractérisé en ce que** deux qubits auxiliaires observant un même qubit de données sont couplés à des électromètres excités avec des fréquences distinctes.

6. Dispositif quantique selon l'une des revendications 1 à 5, **caractérisé en ce qu'**une dimension caractéristique, d'une gamme ou région de valeurs d'au moins une grandeur démodulée, la gamme ou région étant associée à un syndrome d'erreurs quantiques donné, est modifiée en fonction d'une probabilité d'apparition (145) dudit syndrome donné et d'une attribution des modulations faite sur la base de ladite probabilité.

7. Dispositif quantique selon l'une des revendications 1 à 6, **caractérisé en ce qu'**un module de décodage de l'information démodulée (130) est à l'intérieur d'un cryostat maintenant les qubits à une température cryogénique de fonctionnement, le module d'attribution (150) étant en dehors dudit cryostat et fournissant par une consigne (180) au module de décodage de l'information démodulée (130) des seuils de détection aux fins de décodage.

8. Dispositif quantique selon l'une des revendications 1 à 7, **caractérisé en ce qu'**un module de décodage du code correcteur d'erreurs (140) génère une liste (145) de probabilités de syndromes pour une lecture ultérieure au vu d'un signal analogique (125) qui lui est communiqué par un module de démodulation (120).

9. Dispositif quantique selon l'une des revendications 1 à 8, **caractérisé en ce que** le module de démodulation (120) est à l'intérieur d'un cryostat maintenant les qubits à une température cryogénique de fonctionnement, le module de décodage du code correcteur d'erreurs (140) étant en dehors dudit cryostat.

10. Dispositif quantique selon l'une des revendications 1 à 9, **caractérisé en ce que** le code est le code surface-17 ou un autre code de surface.

11. Dispositif quantique selon l'une des revendications 1 à 10, **caractérisé en ce que** plusieurs fréquences différentes sont utilisées, chaque fréquence étant commune à une pluralité de qubits, ou spécifique à un qubit.

12. Dispositif quantique selon l'une des revendications 1 à 11, **caractérisé en ce que** plusieurs électromètres d'un groupe d'électromètres sont excités à une fréquence commune et avec des phases ou amplitudes propres à chaque électromètre du groupe, le module de démodulation effectuant une démodulation en quadrature (120) par mélange avec la fréquence commune pour fournir un signal démodulé, les modulations introduites par le module de génération de tensions comprenant des modulations en phase ou amplitude.

Fig. 1

Fig. 2

Fig. 3

Fig. 4

Fig. 5

Fig. 6

Fig. 7

Fig. 8

Fig. 9

Fig. 10

amplitude

$f_{k-2}$  $f_{k-1}$  $f_k$  $f_{k+1}$  $f_{k+2}$  fréquence

amplitude

$f_{k-2}$  $f_{k-1}$  $f_k$  $f_{k+1}$  $f_{k+2}$  fréquence

Fig. 11

Europäisches
Patentamt

European
Patent Office

Office européen
des brevets

**RAPPORT DE RECHERCHE EUROPEENNE**

Numéro de la demande

EP 25 21 6716

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | QUENTIN SCHMIDT ET AL: "Compact frequency multiplexed readout of silicon quantum dots in monolithic FDSOI 28nm technology", ARXIV.ORG, CORNELL UNIVERSITY LIBRARY, 201 OLIN LIBRARY CORNELL UNIVERSITY ITHACA, NY 14853, 29 octobre 2024 (2024-10-29), XP091921537, DOI: 10.1109/ESSERC62670.2024.10719580 * le document en entier * ----- | 1-12 | INV. G06N10/40 G06N10/70 |
| A | HEINSOO JOHANNES ET AL: "Rapid High-fidelity Multiplexed Readout of Superconducting Qubits", PHYSICAL REVIEW APPLIED , vol. 10, no. 3 1 septembre 2018 (2018-09-01), XP055977840, DOI: 10.1103/PhysRevApplied.10.034040 Extrait de l'Internet: URL:https://link.aps.org/article/10.1103/P hysRevApplied.10.034040 * abrégé * * chapitres I-IV; page 1 - page 6; figures 1-6 * * chapitres "Appendi A" - "Appendix F"; page 8 - page 12; figures 8-12 * ----- -/-- | 1-12 | DOMAINES TECHNIQUES RECHERCHES (IPC) G06N |

Le présent rapport a été établi pour toutes les revendications

| Lieu de la recherche | Date d'achèvement de la recherche | Examinateur |
|---|---|---|
| La Haye | 2 décembre 2025 | Hasnas, Sergiu |

EPO FORM 1503 03.82 (P04C02)

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

page 1 de 2

Europäisches
Patentamt

European
Patent Office

Office européen
des brevets

## RAPPORT DE RECHERCHE EUROPEENNE

Numéro de la demande

EP 25 21 6716

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WEINSTEIN YAAKOV S ED - HIROTA OSAMU ET AL: "Syndrome measurement order for the [[7,1,3]] quantum error correction code", QUANTUM INFORMATION PROCESSING, SPRINGER US, NEW YORK, vol. 15, no. 3, 19 juillet 2015 (2015-07-19), pages 1263-1271, XP035929220, ISSN: 1570-0755, DOI: 10.1007/S11128-015-1068-Z [extrait le 2015-07-19] * le document en entier * ----- | 1-12 | |
| A | MINN DONGGYU ET AL: "A Cryo-CMOS Homodyne-Demodulation Qubit Readout IC With Continuous-Time Analog Integration for SNR Improvement", IEEE SOLID-STATE CIRCUITS LETTERS, IEEE, vol. 6, 21 août 2023 (2023-08-21), pages 241-244, XP011949394, DOI: 10.1109/LSSC.2023.3307456 * abrégé * * chapitre I; page 241; figure 1 * ----- | 7,9 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 2 décembre 2025 | Hasnas, Sergiu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 4016402 A1
- WO 2018185542 A1
- WO 2021061776 A1
- US 20220140927 A1
- EP 2075745 A1
- FR 2306530
- FR 2403977

**Littérature non-brevet citée dans la description**

- **HUANG, J.Y.** ; **SU, R.Y.** ; **LIM, W.H. et al.** High-fidelity spin qubit operation and algorithmic initialization above 1 K. *Nature*, 2024, vol. 627, 772-777
- **PARK et al.** A fully integrated cryo-CMOS SoC for state manipulation, readout and high-speed gate pulsing of spin qubits. *IEEE Journal of solid state circuits*, vol. 56 (11), 3289-3306
- **M. JERGER et al.** Frequency division multiplexing readout and simultaneous manipulation of an array of flux qubits. *Appl. Phys. Lett.*, 23 July 2012, vol. 101 (4), 042604
- **M. J. GONG et al.** Design Considerations for Spin Readout Amplifiers in Monolithically Integrated Semiconductor Quantum Processors. *2019 IEEE Radio Frequency Integrated Circuits Symposium (RFIC), Boston, MA, USA*, 2019, 111-114
- **B. RAZAVI**. A 622 Mb/s 4.5 pA//spl radic/Hz CMOS transimpedance amplifier [for optical receiver front-end. *2000 IEEE International Solid-State Circuits Conference. Digest of Technical Papers (Cat. No.00CH37056), San Francisco, CA, USA*, 2000, 162-163
- **A. ROMANOVA et al.** A Review of Modern CMOS Transimpedance Amplifiers for OTDR Applications. *Electronics*, 2019, vol. 8, 1073
- **TOMITA, YU** ; **KRYSTA M. SVORE**. Low-Distance Surface Codes under Realistic Quantum Noise. *Physical Review A*, 11 December 2014, vol. 90 (6), 062320